# EUROPÄISCHE PATENTSCHRIFT

(11) **EP 2 096 203 B1**
(45) Veröffentlichungstag und Bekanntmachung des Hinweises auf die Patenterteilung: **25.01.2012**
(21) Anmeldenummer: 09007130.9
(22) Anmeldetag: 28.05.2009
(51) Int. Cl.: D06F 39/00, D06F 39/08, D06F 39/04, F28D 21/00

(54) **Haushalt-Waschmaschine mit Wärmepumpe**
Household washing machine with heat pump
Lave-linge ménager doté d'une pompe à chaleur

(43) Veröffentlichungstag der Anmeldung: 02.09.2009
(73) Patentinhaber: V-Zug AG, 6301 Zug (CH)
(72) Erfinder: Werner, Jürg, 8908 Hedingen (CH); Dober, Ernst, 6036 Dierikon (CH)
(74) Vertreter: Sutter, Kurt

(56) Entgegenhaltungen:
- EP-A1- 1 700 943
- WO-A1-2007/144340
- DE-A1- 2 161 495
- DE-A1- 2 501 165
- DE-A1-102004 023 126

## Beschreibung

Die Erfindung betrifft eine Haushalt-Waschmaschine sowie ein Verfahren zu deren Betrieb.

In einer Haushalt-Waschmaschine ist eine verhältnismässig grosse Wassermenge von z.B. 20 Litern auf Temperaturen zwischen 20°C und 95°C zu erwärmen, was beträchtliche Mengen an Energie erfordert.

DE 102004023126 beschreibt eine Waschmaschine mit einem Zwischenspeicher, in welchem Abwasser zwischengespeichert wird, um dessen Wärme in einer späteren Prozessphase zu nutzen.

Aufgabe der vorliegenden Erfindung ist es, die Energieeffizienz einer Haushalt-Waschmaschine zu verbessern. Diese Aufgabe wird von den unabhängigen Ansprüchen gelöst.

Anspruchsgemäss ist die Haushalt-Waschmaschine also mit einem Zwischenspeicher zur Aufnahme von Wärme aus einer ersten Prozessphase ausgestattet, sowie mit einer Wärmepumpe zum Transfer mindestens eines Teils der Wärme aus dem Zwischenspeicher in das Prozesswasser einer zweiten Prozessphase. Bei der zweiten Prozessphase handelt es sich dabei um eine Prozessphase, die nach der ersten Prozessphase durchgeführt wird. Die erste und die zweite Prozessphase können dabei der Reinigung derselben Wäschecharge dienen, oder die erste Prozessphase kann Teil der Reinigung einer ersten Wäschecharge und die zweite Prozessphase Teil der Reinigung einer zweiten, späteren Wäschecharge sein.

Der Zwischenspeicher ist als Behälter zur Speicherung mindestens eines Teils des Abwassers der ersten Prozessphase ausgestaltet.

Es sind Mittel zum Umrühren oder Umpumpen des Abwassers im Behälter vorgesehen. Durch diese können die Wärmekopplung mit der Wärmepumpe verbessert und Ablagerungen vermieden werden.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine erste Ausführung einer Waschmaschine,
Fig. 2 eine zweite Ausführung einer Waschmaschine mit Bypass,
Fig. 3 eine dritte Ausführung einer Waschmaschine mit Kondensator an der Zirkulationspumpe und
Fig. 4 eine vierte Ausführung einer Waschmaschine mit Kondensator am Zirkulationsrohr.

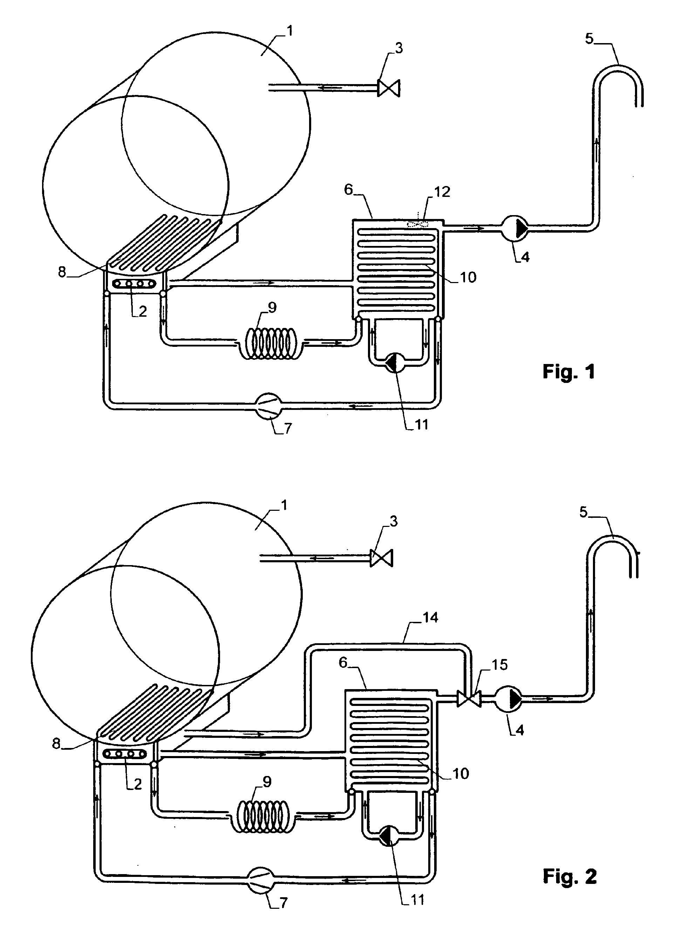

Die in Fig. 1 schematisch dargestellte Waschmaschine besitzt einen Bottich 1, in welchem in der Regel eine Trommel (nicht gezeigt) zur Aufnahme der zu waschenden Wäsche angeordnet ist. Am Bottich 1 ist (optional) eine elektrische Heizung 2 angeordnet, welche dazu dient, Prozesswasser elektrisch auf die gewünschte Temperatur zu heizen. Weiter besitzt das Gerät in bekannter Weise einen Trommelantrieb um die Trommel zu drehen. Eine Steuerung kontrolliert und steuert die Operationen aller Komponenten. Ein derart ausgestaltetes Gerät ist dem Fachmann bekannt.

Frischwasser wird dem Gerät zur Verwendung als Prozesswasser über ein Frischwasserventil 3 zugeführt. Gebrauchtes Wasser wird von einer Ablaufpumpe 4 in eine Abwasserleitung 5 abgepumpt. Auch diese Komponenten sind dem Fachmann grundsätzlich bekannt.

In der Ausführung nach Fig. 1 wird das Abwasser, d.h. das verbrauchte Prozesswasser, aus dem Bottich 1 über einen Behälter 6 geführt, bevor es zur Abwasserleitung 5 gelangt. Das Gerät besitzt weiter eine Wärmepumpe umfassend einen Kompressor 7, von welchem ein Wärmepumpenmedium zu einem Kondensator 8 gepumpt wird, wo unter Abgabe von Wärme eine Verflüssigung stattfindet. Vom Kondensator 8 gelangt das Medium über ein Expansionsventil 9 zu einem Verdampfer 10, wo das Medium unter Aufnahme von Wärme verdampft. Vom Verdampfer 10 läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist der Kondensator 8 am Bottich 1 angeordnet, und zwar vorzugsweise an dessen Bodenbereich, da sich dort das Prozesswasser ansammelt. Der Kondensator 8 steht mit dem Bottich 1 und somit mit dem sich darin befindlichen Prozesswasser in direktem, Wärme leitenden Kontakt. Er kann z.B. innerhalb, ausserhalb oder in der Bottichwand angeordnet sein.

Der Verdampfer 10 ist thermisch mit dem Behälter 6 und somit mit dem sich im Behälter 6 befindlichen Abwasser gekoppelt. Er kann innerhalb des Behälters 6 oder in oder an dessen Wand angeordnet sein.

Die Funktionsweise des Geräts während einem Waschprogramm, d.h. einem Zyklus zum Waschen einer Wäschecharge, ist wie folgt:
1. Zu Beginn wird über das Frischwasserventil 3 Frischwasser für den Hauptwaschgang eingelassen, z.B. 20 bis 25 Liter für 8 kg Wäsche. Unter Normbedingungen besitzt dieses Frischwasser z.B. eine Temperatur von 15°C.
2. Gleichzeitig wird die Wärmepumpe gestartet, mit dem Ziel, Wärmeenergie aus dem Behälter 6, welcher die Funktion eines Zwischenspeichers für Wärme besitzt, zu entziehen und dem Prozesswasser im Bottich 1 zuzuführen. Erreicht die Temperatur im Bottich 1 bzw. im Reinigungswasser dabei einen vorgegebenen Wert (je nach Programm z.B. zwischen 20, 30, 40, 60 oder 95°C) nicht, so kann zusätzlich mit der elektrischen Heizung 2 elektrisch geheizt werden, entweder gleichzeitig mit oder nach dem Heizen mittels Wärmepumpe. Die Wärmepumpe wird ausgeschaltet, wenn die Temperatur des Wassers im Behälter eine vorgegebene Schwelle von z.B. 5°C unterschreitet, so dass ein Vereisen verhindert wird. Mit dem so aufgewärmten Prozesswasser wird die Wäsche gewaschen.
3. Am Ende dieser Waschphase wird die Ablaufpumpe 4 in Betrieb gesetzt. Das Wasser im Behälter 6 wird dabei über die Abwasserleitung 5 fortgeführt und im Behälter 6 durch das Abwasser aus dem Bottich 1 ersetzt. Das Volumen des Abwasserbehälters beträgt z.B. 20 Liter, so dass er zumindest einen grossen Teil des Wassers aus dem Bottich aufnehmen kann.
4. Über Frischwasserventil 3 wird neues Frischwasser (z.B. 15 bis 20 Liter) für eine Spülphase eingelassen.
5. Die Wärmepumpe wird wieder in Gang gesetzt, um die Wärme vom Behälter 6 in das Prozesswasser im Bottich 1 zu fördern. Wiederum wird dabei das Wasser im Behälter 6 höchstens auf die erwähnte Schwelle von z.B. 5°C abgekühlt. Während dem Aufheizen des Prozesswassers in dieser Art wird die Trommel vorzugsweise in einer nur schwachen Reversierbewegung hin- und herbewegt, damit die Wärme nicht von der Wäsche bzw. dem Bottich aufgenommen sondern zu einem möglichst grossen Teil an das Prozesswasser übergeben wird. Sodann kann das Spülen der Wäsche unter stärkerer Reversierung stattfinden.
6. Das Wasser aus dem Bottich 1 wird wiederum abgepumpt und ersetzt das nun kalte Wasser im Behälter 6.
7. Über Frischwasserventil 3 wird neues Frischwasser (z.B. 15 bis 20 Liter) für eine Veredlungsphase (optional) eingelassen.
8. Die Wärmepumpe wird wieder in Gang gesetzt, um die Wärme vom Behälter 6 in das Prozesswasser im Bottich 1 zu fördern. Sobald die Wärme vom Ablaufbehälter 6 getauscht ist bzw. dessen Temperatur unter z.B. 5°C absinkt, wird die Wärmepumpe abgeschaltet. Wiederum wird die Trommel während dem Aufheizen nur schwach reversiert. Sodann kann das Veredeln der Wäsche unter stärkerer Reversierung stattfinden.
9. Das Wasser aus dem Bottich 1 wird wiederum abgepumpt und ersetzt das nun kalte Wasser im Behälter 6.

Aus dem obigen Prozessablauf ist ersichtlich, dass mit der Wärmepumpe Wärme aus einer ersten, früheren Prozessphase aus dem Behälter 6 in das Prozesswasser einer zweiten, späteren Prozessphase transferiert wird, so dass die Wärmepumpe als Heizung eingesetzt und die Energiebilanz des Geräts verbessert werden kann. Insbesondere kann auch in der Spülphase und/oder der Veredlungsphase warmes Wasser verwendet werden, so dass deren Wirksamkeit verbessert wird, ohne dass eine grosse Menge zusätzlicher Energie benötigt wird.

Zu Beginn des Waschprogramms kann zudem die Wärme aus dem Abwasser des vorherigen Waschprogramms genutzt werden, falls der zeitliche Abstand zwischen den Waschprogrammen nicht zu gross ist. Falls zwischen den Waschprogrammen lange Zeit verstrichen ist, kann zumindest die Wärme genutzt werden, die sich aus dem Abkühlen des Wassers in Behälter 6 von der Raumtemperatur auf ca. 5°C ergibt.

Da das Abwasser vom Bottich 1 mit Schmutz belastet ist, sind vorzugsweise Massnahmen vorzusehen, die eine Schmutzablagerung bzw. -sedimentierung im Behälter 6 verhindern oder reduzieren.

Anspruchsgemäss sind deshalb am Behälter 6 Mittel zum Umrühren oder Umpumpen des Abwassers vorgesehen, so z.B. die in Fig. 1 dargestellte Zirkulationspumpe 11, mit welcher Wasser an einem Ort des Behälters 6 entnommen und an einem anderen Ort wieder zugeführt wird. Alternativ oder zusätzlich hierzu kann ein Rührwerk 12 vorgesehen sein, mit welchem das Wasser im Behälter 6 in Bewegung gehalten wird, um so Ablagerungen bzw. eine Sedimentbildung zu vermeiden. Die Bewegung des Wassers beschleunigt auch den Wärmeaustausch, während dem die Wärmepumpe läuft.

Zusätzlich hierzu können konstruktive Massnahmen am Behälter 6 vorgesehen sein, wie z.B. die Ausgestaltung des Behälters 6 als langes, mäandriert oder gerollt ausgestaltetes Rohr ohne Nischen, in denen sich Ablagerungen bilden könnten.

Der Behälter 6 kann auch öffenbar ausgestaltet sein, so dass sein Inneres einer Wartungsreinigung zugänglich ist.

Vorzugsweise wird der Behälter 6, welcher mit dem darin enthaltenen Wasser ein beträchtliches Gewicht hat, aus mechanischen Gründen stationär und im Bodenbereich der Waschmaschine angeordnet. Unter Bodenbereich ist dabei die untere Hälfte der Waschmaschine, insbesondere ein unterer Viertel der Waschmaschine, zu verstehen. Denkbar ist aber beispielsweise auch eine Anordnung des Behälters 6 am Bottich 1, wobei in diesem Fall vorzugsweise eine thermische Isolation zwischen dem Bottich 1 und dem Behälter vorgesehen sein sollte, damit es nicht zu einem "Wärmekurzschluss" kommt, da die Wärme mittels der Wärmepumpe effizienter an den Bottich 1 übertragen werden kann als durch direkten Wärmekontakt. Die Anordnung des Behälters 6 am Bottich 1 hat den Vorteil, dass so die vom Trommellauf erzeugten Schwingungen des Bottichs gedämpft werden können.

Um Wärmeverluste zwischen den Prozessphasen zu reduzieren, ist der Behälter 6 vorzugsweise thermisch isoliert.

In der Ausführung nach Fig. 1 durchläuft das Abwasser vom Bottich 1 zwangsläufig den Behälter 6. Alternativ hierzu kann ein Bypass 14 vorgesehen sein, wie er in der Ausführung nach Fig. 2 dargestellt ist. In dieser Ausführung kann durch Betätigung eines Umschaltventils 15 gesteuert werden, ob das Abwasser vom Behälter 6 über den Behälter 6 oder über den Bypass 14, unter Umgehung des Behälters 6, in das Abflussrohr 5 abgeführt wird. Dadurch wird es möglich die Wärmeenergie vom Abwasser über mehr als einen Prozessschritt zurückzubehalten. Falls beispielsweise in den obigen Schritten 5 und 8 (Spülphase, Veredlungsphase) kein erwärmtes Wasser verwendet werden soll, so kann das Abwasser aus diesen Phasen über den Bypass 14 abgeführt werden, so dass das warme Wasser aus dem Hauptwaschgang (Schritt 2) im Behälter 6 verbleibt und seine Wärme z.B. für den Hauptwaschgang der nächsten Wäschecharge zur Verfügung steht.

Der in Fig. 1 und 2 dargestellte Kondensator 8 besteht aus einer Vielzahl von Rohren, welche sich in Längs- bzw. Achsrichtung des Bottichs 1 erstrecken. Denkbar ist jedoch auch eine Anordnung der Rohre senkrecht hierzu, d.h. tangential zur zylindrischen Bottichwand. Vorzugsweise wird der Kondensator vor allem im hinteren Bereich des Bottichs 1, d.h. an dem der Benutzertüre entgegensetzten Ende des Bottichs 1, angeordnet, da dort mehr Platz ist, insbesondere im Hinblick auf die Auslenkung der Trommel beim Zentrifugieren der Wäsche.

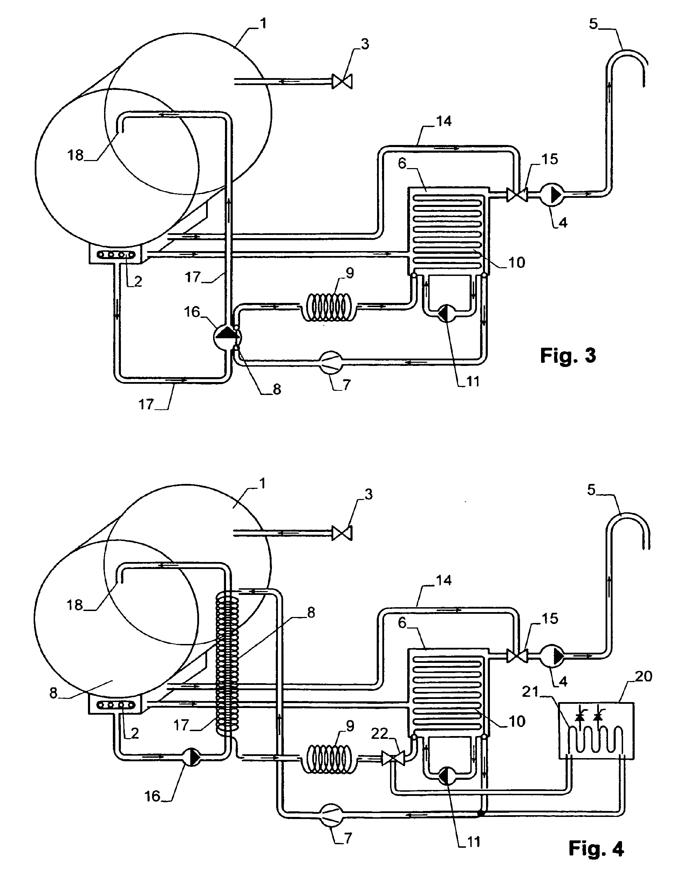

In den Ausführungen gemäss Fig. 1 und 2 wird die Wärme aus dem Kondensator 8 direkt an den Bottich 1 bzw. das sich darin befindliche Prozesswasser übertragen. Alternativ oder zusätzlich hierzu kann eine Art der Wärmeübertragung aus dem Kondensator 8 verwendet werden, wie sie in Fig. 3 und 4 dargestellt ist. In beiden diesen Ausführungen ist am Bottich ein Zirkulationssystem vorgesehen, mit welchem Prozesswasser an einem ersten Ort aus dem Bottich entnommen und an einem zweiten Ort wieder in den Bottich eingeführt werden kann. Das Zirkulationssystem umfasst eine Zirkulationspumpe 16 sowie Schlauch- oder Rohrleitungen 17, und dient dazu Prozesswasser aus dem Bodenbereich des Bottichs 1 zu einer Düse 18 im oberen Bereich der Trommel zu führen. Eine Düse dieser Art ist in EP 1700943 beschrieben und kann z.B. dazu verwendet werden, die Wäsche schneller zu benetzen und/oder bei Teilbeladung eine Berieselung durchzuführen.

Ist ein Zirkulationssystem 16, 17, 18 der in Fig. 3 oder 4 gezeigten Art vorhanden, so kann der Kondensator 8 der Wärmepumpe, oder zumindest ein Teil dieses Kondensators 8, am Zirkulationssystem angeordnet werden, um die Wärme an das im Zirkulationssystem zirkulierende Prozesswasser zu übergeben. Da das Wasser im Zirkulationssystem dauernd oder zumindest zeitweise umgepumpt wird, kann durch diese Anordnung ein schnellerer Wärmetransfer realisiert werden.

In der Ausführung nach Fig. 3 ist zu diesem Zweck der Wärmetauscher 8 (in Fig. 3 nur sehr schematisch dargestellt) an der Zirkulationspumpe 16 angeordnet. Vorzugsweise befindet sich der Kondensator 8 am oder im Pumpengehäuse der Zirkulationspumpe 16, wo er das Prozesswasser erwärmt.

In der Ausführung nach Fig. 4 ist der Kondensator 8 an der Rohr- oder Schlauchleitung 17 des Zirkulationssystems angeordnet, wo er seine Wärme an das in der Leitung 17 zirkulierende Prozesswasser abgeben kann.

Kondensatoren 8 der in den Figuren 1 - 4 gezeigten Art können auch miteinander kombiniert werden.

In der Ausführung nach Fig. 4 ist noch eine weitere Verbesserung dargestellt, die grundsätzlich bei allen Ausführungen der Erfindung zum Einsatz kommen kann. Demnach ist die Waschmaschine zusätzlich mit einer an sich bekannten Elektronik 20 zum Ansteuern der Komponenten ausgestattet, so insbesondere zum Ansteuern der Motoren sowie der elektrischen Heizung 2 und der verschiedenen Pumpen und Kompressoren 4, 7, 11, 16. Insbesondere der Leistungsteil einer solchen Elektronik 20 oder andere Aktoren wie der Antriebsmotor erzeugt relativ viel Wärme. Diese kann, wie dargestellt, von einem in der Wärmepumpe angeordneten und mit der Elektronik in thermischem Kontakt stehenden Verdampfer 21 abgeführt und zum Heizen des Prozesswassers eingesetzt werden. Somit können einerseits ein Überhitzen der Elektronik 20 vermieden und andererseits die Energieeffizienz des Geräts verbessert werden.

Der Verdampfer 21 kann Teil des oben erwähnten Verdampfers 10 sein, oder ein separater Verdampfer, wobei in diesem Fall eine Verzweigung oder ein Umschaltventil 22 vorzusehen ist. Dem Verdampfer 21 kann optional auch ein eigenes Expansionsventil vorgeschaltet sein, das im Hinblick auf Durchfluss und Temperatur dem Verdampfer 21 speziell angepasst werden kann.

Wie erwähnt, dient der Behälter 6 in den obigen Ausführungen als Zwischenspeicher, um Wärme einer ersten Prozessphase für eine spätere, zweite Prozessphase zu speichern, was in den gezeigten Ausführungen dadurch geschieht, dass das warme Prozesswasser aus der ersten Prozessphase im Behälter 6 gelagert wird.

Denkbar ist es jedoch, dass als Zwischenspeicher eine andere Art von Wärmespeicher eingesetzt wird. Beispielsweise kann der Zwischenspeicher auch aus einer möglichst grossen thermischen Masse, d.h. einem Wärmespeichermaterial, bestehen. In diesem Falle muss die Waschmaschine dazu ausgestaltet sein, Wärme aus dem Prozesswasser der ersten Prozessphase in den Zwischenspeicher übertragen, aus welchem sodann mittels der Wärmepumpe Wärme in das Prozesswasser der zweiten Prozessphase übertragen wird.

Die Übertragung der Wärme aus dem Wasser der ersten Prozessphase in den Zwischenspeicher kann z.B. mittels Wärmetausch realisiert werden, vorzugweise wird hierfür jedoch, wegen der höheren Übertragungseffizienz, die Wärmepumpe eingesetzt.

Wird die Wärmepumpe eingesetzt, um sowohl Wärme aus dem Prozesswasser der ersten Prozessphase in den Zwischenspeicher als auch Wärme vom Zwischenspeicher in das Prozesswasser der zweiten Prozessphase zu übertragen, so kann die Wärmepumpe z.B. zwischen dem Zwischenspeicher und dem Bottich oder zwischen dem Zwischenspeicher und den Schlauch- bzw. Rohleitungen 17 angeordnet und abhängig von der gewünschten Wärmetransferrichtung in der einen oder der anderen Richtung betrieben werden.

Indem als Zwischenspeicher nicht ein Abwasserbehälter 6 verwendet wird, kann die oben beschriebene Problematik der Ablagerung bzw. Sedimentierung vom Schmutz im Behälter vermieden werden.

Das in den obigen bevorzugten Ausführungen beschriebene Gerät ist vorzugsweise ein reiner Waschautomat, welcher die Wäsche reinigt und sodann gegebenenfalls zum Wasserentzug noch zentrifugiert, der aber keine weitere Trocknerfunktion mit Warmluft aufweist. Denkbar ist die Benutzung der Erfindung jedoch auch bei einem Waschautomat, der auch als Trocknergerät ausgestaltet ist, in welchem die Wäsche mit warmer Prozessluft getrocknet werden kann.

Die hier beschriebene Funktionalität der Wärmepumpe kann vorzugsweise vom Benutzer aktiviert und deaktiviert werden, z.B. durch Anwahl eines geeigneten Waschprogramms. So kann z.B. dem Benutzer ein langsameres Programm und ein schnelleres Programm zur Verfügung gestellt werden, wobei bei Anwahl des langsameren Programms die Wärmepumpe vermehrt und beim schnelleren Programm vermindert oder gar nicht zum Einsatz kommt.

Die oben erwähnte Ablaufpumpe 4 kann vor oder nach dem Behälter 6 angeordnet werden.

## Patentansprüche

1. Haushalt-Waschmaschine mit einem Bottich (1) zur Aufnahme von zu waschender Wäsche und mit einer Heizung (2; 7 - 12) zum Erwärmen von Prozesswasser, wobei die Waschmaschine einen Zwischenspeicher zur Aufnahme von Wärme einer ersten Prozessphase aufweist sowie eine Wärmepumpe (7 - 10) zum Transfer mindestens eines Teils der Wärme aus dem Zwischenspeicher in Prozesswasser einer zweiten, nach der Ersten durchgeführten Prozessphase ausgestaltet ist, wobei der Zwischenspeicher einen Behälter (6) zur Speicherung mindestens eines Teils von Abwasser der ersten Prozessphase aufweist, wobei ein Verdampfer (10) der Wärmepumpe (7 - 10) thermisch mit dem Behälter (6) gekoppelt ist, **dadurch gekennzeichnet, dass** die Haushalt-Waschmaschine Mittel (11, 12) zum Umrühren oder Umpumpen des Abwassers im Behälter (6) aufweist.

2. Waschmaschine nach Anspruch 1 mit einem Bypass (14) und einem Umschaltventil (15), wobei Abwasser aus dem Bottich (1) durch Betätigung des Umschaltventils (15) wahlweise durch den Behälter (6) oder unter Umgehung des Behälters (6) durch den Bypass (14) abführbar ist.

3. Waschmaschine nach einem der vorangehenden Ansprüche, wobei ein Kondensator (8) der Wärmepumpe (7 - 10) am Bottich (1) angeordnet ist.

4. Waschmaschine nach einem der Ansprüche 1 oder 2, wobei die Waschmaschine weiter ein Zirkulationssystem (16, 17, 18) aufweist, durch welches Prozesswasser an einem ersten Ort aus dem Bottich (1) entnehmbar und an einem zweiten Ort wieder in den Bottich (1) einführbar ist, und wobei ein Kondensator (8) der Wärmepumpe (7 - 10) am Zirkulationssystem (16, 17, 18) angeordnet ist.

5. Waschmaschine nach Anspruch 4, wobei das Zirkulationssystem (16, 17, 18) eine Zirkulationspumpe (16) aufweist und wobei mindestens ein Teil des Kondensators (8) an einer Pumpkammer der Zirkulationspumpe (16) angeordnet ist.

6. Waschmaschine nach einem der Ansprüche 4 oder 5, wobei mindestens ein Teil des Kondensators (8) an einer Rohr- oder Schlauchleitung (17) des Zirkulationssystems (16, 17, 18) angeordnet ist.

7. Waschmaschine nach einem der vorangehenden Ansprüche wobei die Waschmaschine dazu ausgestaltet ist, Wärme aus dem Prozesswasser der ersten Prozessphase in den Zwischenspeicher und mit der Wärmepumpe (7 - 10) Wärme aus dem Zwischenspeicher in das Prozesswasser der zweiten Prozessphase zu übertragen, und insbesondere wobei die Waschmaschine dazu ausgestaltet ist, Wärme mit der Wärmepumpe (7 - 10) aus dem Prozesswasser der ersten Prozessphase in den Zwischenspeicher zu übertragen.

8. Waschmaschine nach einem der vorangehenden Ansprüche, wobei der Zwischenspeicher in einem Bodenbereich der Waschmaschine angeordnet ist.

9. Waschmaschine nach einem der Ansprüche 1 bis 7, wobei der Zwischenspeicher am Bottich (1) angeordnet ist.

10. Waschmaschine nach einem der vorangehenden Ansprüche, wobei die Wärmepumpe (7 - 10) dazu ausgestaltet ist, aus einer Elektronik (20) oder aus einem anderen Aktor der Waschmaschine Wärme abzuführen, und insbesondere wobei in thermischem Kontakt mit der Elektronik ein Verdampfer (21) der Wärmepumpe (7 - 10) angeordnet ist.

11. Verfahren zum Betrieb einer Haushalt-Waschmaschine nach einem der vorangehenden Ansprüche, bei welcher Wäsche in einem Bottich (1) mit Prozesswasser gewaschen wird, wobei eine erste und später eine zweite Prozessphase durchgeführt werden, wobei Wärme aus der ersten Prozessphase mindestens teilweise in einem Zwischenspeicher gespeichert wird und während der zweiten Prozessphase mit einer Wärmepumpe (7 - 10) mindestens ein Teil der Wärme aus dem Wärmespeicher in das Prozesswasser der zweiten Prozessphase transferiert wird, und wobei das Abwasser im Behälter (6) umgerührt oder umgepumpt wird.

12. Verfahren nach Anspruch 11, wobei mindestens ein Teil des Abwassers der ersten Prozessphase in einem Behälter (6) gespeichert wird und wobei in der zweiten Prozessphase mit der Wärmepumpe (7 - 10) Wärme aus dem Behälter (6) in das Prozesswasser der zweiten Prozessphase transferiert wird.

13. Verfahren nach einem der Ansprüche 11 oder 12, wobei Wärme aus dem Prozesswasser der ersten Prozessphase in den Zwischenspeicher transferiert wird und wobei mit der Wärmepumpe (7 - 10) Wärme aus dem Zwischenspeicher in das Prozesswasser der zweiten Prozessphase gepumpt wird.

## Claims

1. Household washing machine with a vat (1) for receiving laundry to be washed and with a heater (2; 7 - 12) for heating up process water, wherein the washing machine has an intermediary accumulator for storing heat of a first process phase as well as a heat pump (7 - 10) formed to transfer at least a part of the heat from the intermediary accumulator to the process water of a second process phase carried out after the first one, wherein the intermediary accumulator has a container (6) for storing at least a part of residual water of the first process phase, wherein an evaporator (10) of the heat pump (7 - 10) is thermally coupled to the container (6), **characterized in that** the household washing machine has means (11, 12) for stirring or recirculating the residual water in the container (6).

2. Washing machine according to claim 1, with a bypass (14) and a switch valve (15), wherein residual water can be conducted out of the vat (1), by actuating the switch valve (15), optionally through the container (6) or, by bypassing the container (6), through the bypass (14).

3. Washing machine according to one of the preceding claims, wherein a condenser (8) of the heat pump (7 - 10) is arranged at the vat (1).

4. Washing machine according to one of the claims 1 or 2, wherein the washing machine further has a circulation system (16, 17, 18) by means of which process water can be extracted from the vat (1) at a first location and reinserted into the vat (1) at a second location, and wherein the condenser (8) of the heat pump (7 - 10) is arranged at the circulation system (16, 17, 18).

5. Washing machine according to claim 4, wherein the circulation system (16, 17, 18) has a circulation pump (16) and wherein at least a part of the condenser (8) is arranged at a pump chamber of the circulation pump (16).

6. Washing machine according to one of the claims 4 or 5, wherein at least a part of the condenser (8) is arranged at a conduit line or a hose line (17) of the circulation system (16, 17, 18).

7. Washing machine according to one of the preceding claims, wherein the washing machine is formed to transfer heat from the process water of the first process phase into the intermediary accumulator and, by means of the heat pump (7 - 10), heat from the intermediary accumulator into the process water of the second process phase, and particularly wherein the washing machine is formed to transfer heat from the process water of the first process phase into the intermediary accumulator by means of the heat pump (7 - 10).

8. Washing machine according to one of the preceding claims, wherein the intermediary accumulator is arranged in a bottom area of the washing machine.

9. Washing machine according to one of the claims 1 to 7, wherein the intermediary accumulator is arranged at the vat (1).

10. Washing machine according to one of the preceding claims, wherein the heat pump (7 - 10) is formed to conduct heat out of electronics (20) or another actuator of the washing machine, and particularly wherein an evaporator (21) of the heat pump (7 - 10) is arranged in thermal contact with the electronics.

11. Method for operating a household washing machine according to one of the preceding claims, wherein laundry is washed with process water in a vat (1), wherein a first and later a second process phase are carried out, wherein heat from the first process phase is stored at least partly in an intermediary accumulator and during the second phase at least a part of the heat from the heat accumulator is transferred into the process water of the second process phase by means of a water pump (7 - 10), and wherein the residual water in the container (6) is stirred or recirculated.

12. Method according to claim 11, wherein at least a part of the residual water of the first process phase is stored in a container (6) and wherein in the second process phase heat is transferred from the container (6) into the process water of the second process phase by means of the heat pump (7 - 10).

13. Method according to one of the claims 11 or 12, wherein heat from the process water of the first process phase is transferred into the intermediary accumulator and wherein heat is pumped from the intermediary accumulator into the process water of the second process phase by means of the heat pump (7 - 10).

## Revendications

1. Machine à laver pour le ménage avec une cuve (1) pour la réception de linge à laver et avec un chauffage (2; 7 - 12) pour réchauffer de l'eau de processus, la machine à laver ayant un réservoir intermédiaire pour la réception de chaleur d'une première phase de processus et une thermopompe (7- 10) étant formée afin de transférer au moins une partie de la chaleur du réservoir intermédiaire dans l'eau de processus d'une deuxième phase de processus effectuée après la première, le réservoir intermédiaire ayant un récipient (6) pour accumuler au moins une partie d'eau résiduelle de la première phase de processus, un évaporateur (10) de la thermopompe (7 - 10) étant couplé de manière thermique avec le récipient (6), **caractérisée en ce que** la machine à laver pour le ménage a des moyens (11, 12) pour brasser ou récirculer l'eau résiduelle dans le récipient (6).

2. Machine à laver selon la revendication 1, avec un contournement (14) et une soupape de commutation (15), de l'eau résiduelle étant conduite hors de la cuve (1) par un actionnement de la soupape de commutation (15), au choix à travers du récipient (6) ou à travers du contournement (14) en contournant le récipient (6).

3. Machine à laver selon l'une des revendications précédentes, un condensateur (8) de la thermopompe (7 - 10) étant arrangé à la cuve (1).

4. Machine à laver selon l'une des revendications 1 ou 2, la machine à laver ayant en outre un système de circulation (16, 17, 18) à l'aide duquel de l'eau de processus peut être extraite de la cuve (1) à un premier emplacement et introduite de nouveau dans la cuve (1) à un deuxième emplacement, et le condensateur (8) de la thermopompe (7 - 10) étant arrangé au système de circulation (16, 17, 18).

5. Machine à laver selon la revendication 4, le système de circulation (16, 17, 18) ayant une pompe de circulation (16) et au moins une partie du condensateur (8) étant arrangée à une chambre de la pompe de la pompe de circulation (16).

6. Machine à laver selon l'une des revendications 4 ou 5, au moins une partie du condensateur (8) étant arrangée à un tuyau ou à un tuyau flexible (17) du système de circulation (16, 17, 18).

7. Machine à laver selon l'une des revendications précédentes, la machine à laver étant formée de manière à transférer de la chaleur de l'eau de processus de la première phase de processus dans le réservoir intermédiaire et de la chaleur du réservoir intermédiaire dans l'eau de processus de la deuxième phase de processus à l'aide de la thermopompe (7 - 10), et particulièrement la machine à laver étant formée de manière à transférer de la chaleur de l'eau de processus de la première phase de processus dans le réservoir intermédiaire à l'aide de la thermopompe (7 - 10).

8. Machine à laver selon l'une des revendications précédentes, le réservoir intermédiaire étant arrangé dans une zone du fond de la machine à laver.

9. Machine à laver selon l'une des revendications 1 à 7, le réservoir intermédiaire étant arrangé à la cuve (1).

10. Machine à laver selon l'une des revendications précédentes, la thermopompe (7 - 10) étant formée de manière à dégager de la chaleur d'une électronique (20) ou d'un autre actionneur de la machine à laver, et particulièrement un évaporateur (21) de la thermopompe (7 - 10) étant arrangé de manière à être en contact thermique avec l'électronique.

11. Méthode pour l'opération d'une machine à laver pour le ménage selon l'une des revendications précédentes, du linge étant lavé dans une cuve (1) avec de l'eau de processus, une première et plus tard une deuxième phase de processus étant effectuées, de la chaleur de la première phase de processus étant accumulée au moins partiellement dans un réservoir intermédiaire et au moins une partie de la chaleur étant transférée du réservoir intermédiaire dans l'eau de processus de la deuxième phase de processus pendant la deuxième phase de processus à l'aide d'une thermopompe (7 - 10), et l'eau résiduelle étant brassée ou récirculée dans le récipient (6).

12. Méthode selon la revendication 11, au moins une partie de l'eau résiduelle de la première phase de processus étant accumulée dans un récipient (6) et de la chaleur étant transférée, dans la deuxième phase de processus, du récipient (6) dans l'eau de processus de la deuxième phase de processus à l'aide de la thermopompe (7 - 10).

13. Méthode selon la revendication 11 ou 12, de la chaleur étant transférée de l'eau de processus de la première phase de processus dans le réservoir intermédiaire et de la chaleur étant pompée du réservoir intermédiaire dans l'eau de processus de la deuxième phase de processus à l'aide de la thermopompe (7 - 10).
